# EUROPEAN PATENT SPECIFICATION

(11) **EP 4 431 472 B1**
(45) Date of publication and mention of the grant of the patent: **25.06.2025**
(21) Application number: 24163717.2
(22) Date of filing: 15.03.2024
(51) Int. Cl.: B65D 1/40, C03B 27/06, B65D 1/02

(54) **TEMPERED GLASS BOTTLE WITH SANDWICH STRUCTURE**
GEHÄRTETE GLASFLASCHE MIT SANDWICHSTRUKTUR
BOUTEILLE EN VERRE TREMPÉ À STRUCTURE SANDWICH

(30) Priority: 17.03.2023 EP 23162621
(43) Date of publication of application: 18.09.2024
(73) Proprietor: Vetropack Holding AG, CH-8180 Bülach (CH)
(72) Inventor: STUHNE, Dubravko, 8184 Bachenbülach (CH); CORNAZ, Claude, 8454 Buchberg (CH); EGGER, Daniel, 8600 Bruck an der Mur (AT)
(74) Representative: Dilg, Haeusler, Schindelmann Patentanwaltsgesellschaft mbH

(56) References cited:
- JP-A- H03 285 836
- US-A1- 2015 147 497
- US-A1- 2022 017 399
- US-B2- 9 850 162

## Description

### Field of invention

The present invention relates to a glass container having a tempered section with a sandwich structure of comprising at least an outer compression stress layer and an inner tensile stress layer.

### Art Background

Glass bottles and containers for consumer products, such as beverages or other liquid food products, form and the ecologic alternative to lightweight plastic containers and bottles. However, bottles and containers made of glass bear the risk to splinter, if the glass container falls on the ground. Hence, shards of a fallen glass container may cause injuries. Furthermore, glass bottles may function as returnable bottles. However, in use, the glass bottles are prone to scuffing which means, that the softer surface areas of the glass bottles are scratched, so that the optical appearance of the glass bottle becomes less attractive from refilling cycle to refilling cycle.

On the other side, an increase of the used material for the glass containers in order to increase the resistance of a respective glass container causes an increase of weight of the glass container which leads to an uncomfortable weight for the consumer.

US 9 850 162 B2 discloses a glass container comprising a wall section and a bottom section, wherein the wall section and the bottom section surround an inner volume, wherein the tempered section forms a sandwich structure comprising an outer compression stress layer and an inner tensile stress layer.

### Summary of the Invention

Hence, there may be a need to provide a glass container which is simple and cost-efficient to manufacture and comprises at the same time an increased resistance against failure from impact and internal pressure.

This need may be met by a glass container and a respective method for manufacturing a glass container according to the independent claims.

According to first aspect of the present invention, a glass container is presented. The glass container comprises a wall section and a bottom section, wherein wall section and the bottom section surround an inner volume. The tempered section forms a sandwich structure comprising an outer compression stress layer and an inner tensile stress layer. The bottom section comprises a bottom tempered section, wherein a thickness relation between the wall thickness of the wall tempered section and the bottom thickness of the bottom tempered section is between 2 and 4,5. Hence, good results with respect to the robustness of the tempered section by providing a bottom thickness having the above-mentioned ranges.

According to further aspect of the present invention, a method for manufacturing a glass container as described above. The method comprises the steps of providing a glass container with a wall section and a bottom section, wherein the wall section and the bottom section surround an inner volume, and forming a tempered section at least in the wall section by thermal treatment, so that the tempered section forms a sandwich structure comprising an outer compression stress layer and an inner tensile stress layer. The bottom section comprises a bottom tempered section, wherein a thickness relation between the wall thickness of the wall tempered section and the bottom thickness of the bottom tempered section is between 2 and 4,5. Hence, good results with respect to the robustness of the tempered section by providing a bottom thickness having the above-mentioned ranges.

The glass container according to the present invention may describe glass bottles or other glass packages for liquid or solid material, such as beverages or other disclose or solid food articles. The glass container is made of the respective wall section and a bottom section which surround the respective inner volume for storing the material restored. Additionally, the glass container may comprise an opening for filling the container. The glass container may comprise a bottleneck in which the opening is formed.

At least the wall section comprises the tempered section. Specifically, the complete wall section forms the tempered section. In a further exemplary embodiment, the wall section and the bottom section forms the tempered section. However, in alternative embodiments, only a section of the wall section is tempered. Hence, the tempered section is harder than surrounding glass sections. The tempered section of the glass bottle comprises a glass section which is treated in a tempering process for increasing the resistance of the glass material and the tempered section, respectively.

In an exemplary embodiment of the method, the tempering process comprises a heating of the tempered section to a temperature of 610°C to 650°C and a subsequently rapid cooling to a temperature of approximately 150°C to 250 °C within a cooling duration of 1 minute to 4 minutes. For cooling the glass containers, ambient air may be blown into the inner volume and around the glass containers in order to provide a continuous cooling between the inner surface and outer surface of the glass container. According to an exemplary embodiment of the method the cooling is provided by blowing pressurized air with a temperature of 15°C to 25 °C inside the glass container and from outside against the glass container. As a result, the tempered glass section is hardened and in particular harder than other glass sections which are not treated in the hardening process.

Specifically, by the present approach of the present invention it has found out, by controlling the cooling of the inner and outer surface of the tempered section, specific layers having different pre-stressed characteristics can be generated. Specifically, in the tempered section, and in the layer facing to the inner volume may be prestressed by tensile stress and may form the inner tensile stress layer and an outer layer facing to the environment of the tempered section may be prestressed by a compression stress and may form the outer compression stress layer. However, the interaction between the outer compression stress layer and the inner tensile stress layer forms a robust sandwich structure similar to a composite material.

According to a further exemplary embodiment at least the wall section comprises a tempered section having a wall thickness between 1,1 mm and 2,3 mm. During the tempering process a high inner stress of the glass material occurs such that many glass containers may have cracks and other defects due to the high internal tensions caused by the tempering process. Specifically, due to the difficult control of the cooling rate inside the inner side of the glass container and the outer side of the glass container, internal tensions are generated which may cause cracks. Hence, if providing a wall thickness that is too thick, the center sections of the wall element receive less cooling energy than the outer sections of the wall element, such that cracks are generated during the cooling period. On the other side, if the wall thickness of the glass container is too small, the glass containers are less robust specifically during handling of the glass between the heating process and the cooling process, so that the glass containers during the heat treatment may be damaged.

Hence, it has found out, that by providing for the tempered section with a wall thickness between 1,1 mm and 2,3 mm, in particular between 1,3 mm and 2,0 mm, the internal stress of the glass bottle during cooling is reduced so that a tempered section can be provided having less inner defects and at the same time providing proper resistance against mechanical damage.

According to a further exemplary embodiment a first wall thickness and a opposite second wall thickness of the tempered section at a predefined distance to the bottom section comprises a relation of 1:2, in particular 1:1,5. Specifically, the wall section forms a hollow cylinder which is closed by the bottom section on one side. An exemplary embodiment, the bottom section may form a cylindrical, rectangle or polygonal of the cylindrical wall section. However, based on the manufacturing process, the wall thickness of a first wall section at a certain distance to the bottom section may differ to the wall thickness of a second wall section being located at the same distance to the bottom section. However, it has found out, that if the thickness difference between two (opposing) wall sections having the same distance to the bottom surface is too much, defects procure during heating and cooling the glass container, even if the wall thickness of the wall section is within the above-described inventive range. However, it has found out, that if the thickness relation between first wall thickness and the opposite second wall thickness of the tempered section at a predefined distance to the bottom section is within the above defined relation, less stress and defects are generated and a good hardening result is achieved.

According to a further exemplary embodiment, the outer compression stress layer has a wall thickness of 300 µm to 400 µm, in particular 340 µm to 360 µm. Additionally or alternatively, the inner tensile stress layer has a wall thickness of 700 µm to 1600 µm, in particular 900 µm to 1200 µm. Specifically, the thickness of the specific layers can be adjusted by respective cooling power applied to the inner side or the other side of the glass container during tempering. It has found out, that by providing the inner tensile stress layer thicker, in particular by the above-mentioned values, with respect to the thinner outer compression stress layer, a robust sandwich and tempered section, respectively, can be achieved.

According to a further exemplary embodiment, the outer compression stress layer comprises a pretensioned compression stress of -80 MPa to -5 MPa, in particular -70 to -20 MPa, more in particular -60 MPa to -50 MPa. Additionally or alternatively, the inner tensile stress layer comprises a pretensioned tensile stress of 10 MPa to 70 MPa, in particular 15 to 50 MPa more in particular 20 MPa to 30 MPa. It has found out during tests, in particular internal pressure tests and impact tests, that by providing the tensile stress in the inner tensile stress layer and the compression stress in the compression stress layer within the above-mentioned ranges, a most robust sandwich and tempered section, respectively, can be achieved.

The values for the tensile stress and the compression stress define the maximum stress values within a respective layer. Specifically, the compression stress of a compression layer reduces in the direction to the tension layer and vice versa. At a transition section between a compression stress layer and a tensile stress layer, the value for the stress is 0.

According to a further exemplary embodiment, wherein the sandwich structure further comprises an inner compression stress layer, wherein the inner tensile stress layer is arranged between the outer compression stress layer and the inner compression stress layer. Specifically, by controlling the cooling of the inner and outer surface of the tempered section, the above-mentioned central structure can be generated, specifically a sandwich structure having the central inner compression stress layer covered by the outer and inner tensile stress layer. Specifically, it has found out, that the inner tensile stress layer is prone to external impacts. Hence, by additionally providing the in the compression stress layer, the central tensile stress layer is fully covered and protected by the surrounding compression stress layers. The inner compression stress layer faces the inner volume and is in particular in contact with the inner volume of the glass container. Hence, the interaction between the outer compression stress layer, the inner tensile stress layer and the inner compression stress layer forms a robust sandwich structure.

According to a further exemplary embodiment, the inner compression stress layer has a wall thickness of 20 µm to 100 µm, in particular 40 µm to 60 µm and wherein the inner compression stress layer comprises a pretensioned compression stress of -60 MPa to -5 MPa, in particular -50 to -15 MPa, more in particular -30 MPa to -20 MPa. Specifically, the thickness of the specific layers can be adjusted by respective cooling power applied to the inner side or the other side of the glass container during tempering. It has found out, that by providing the inner compression stress layer thinner than the outer compression stress layer according to the ranges as described above, a good robustness against impacts can be achieved. Specifically, it has found out, that by providing the inner tension stress layer thicker than the outer and the inner compression stress layer, a robust sandwich and tempered section, respectively, can be achieved.

According to a further exemplary embodiment, the bottom section comprises a bottom thickness between 2 mm and 5 mm, in particular 2,5 mm to 4 mm. Specifically, the thickness of the bottom section interacts as well with the tempered section since due to the cooling speed of the glass container during tempering, respective stress in the temper section affected by the thickness of the bottom section can appear. Hence, good results with respect to the robustness of the tempered section have been found by providing a bottom thickness having the above-mentioned ranges.

According to a further exemplary embodiment, a thickness relation between the wall thickness of the wall tempered section and the bottom thickness of the bottom tempered section is between 2,5 and 3,5. Hence, good results with respect to the robustness of the tempered section by providing a bottom thickness having the above-mentioned ranges.

According to a further exemplary embodiment, the bottom tempered section forms a bottom sandwich structure comprising a bottom outer compression stress layer and a bottom inner tensile stress layer. The bottom outer compression stress layer has a wall thickness of 300µm to 400 µm, in particular 340 µm to 360 µm. Additionally or alternatively, the bottom inner tensile stress layer has a wall thickness of 700 µm to 4700 µm, in particular 900 µm to 4000 µm. Additionally or alternatively the bottom outer compression stress layer comprises a pretensioned compression stress of -80 MPa to -5 MPa, in particular -70 to -20 MPa, more in particular -60 MPa to -50 MPa. Additionally or alternatively the bottom inner tensile stress layer comprises a pretensioned tensile stress of 10 MPa to 70 MPa, in particular 15 MPa to 50 MPa more in particular 20 MPa to 30 MPa. The thickness of the specific layers can be adjusted by respective cooling power applied to the inner side or the other side of the glass container during tempering. Furthermore, the cooling rate of the bottom sandwich structure may be controlled by a temperature-controlled cooling plate to which the glass container may be adjusted during tempering. Specifically, by applying one of the above-mentioned parameters for the bottom structure, good results with respect to the robustness of the tempered section and the bottom sandwich can be achieved.

According to a further exemplary embodiment, the bottom sandwich structure further comprises a bottom inner compression stress layer, the inner tensile stress layer is arranged between the outer compression stress layer and the inner compression stress layer, wherein the bottom inner compression stress layer has a bottom wall thickness of 20 µm to 100 µm, in particular 40 µm to 60 µm wherein the bottom inner compression stress layer comprises a pretensioned compression stress of -60 MPa to -5 MPa, in particular -50 to -15 MPa, more in particular -30 MPa to -20 MPa. It has found out, that by providing the bottom inner compression stress layer thinner than the bottom outer compression stress layer according to the ranges as described above, a good robustness against impacts can be achieved. Specifically, it has found out, that by providing the bottom inner tension stress layer thicker than the bottom outer and the inner compression stress layer, a robust sandwich and tempered section, respectively, can be achieved.

According to a further exemplary embodiment, the glass container further comprises a bottleneck section comprising an opening between the environment and the inner volume. The walls section is formed between the bottom section and the bottleneck section, wherein the bottleneck section comprises a bottom tempered section forming a bottleneck sandwich structure comprising a bottleneck outer compression stress layer and a bottleneck inner tensile stress layer. The bottleneck sandwich structure further comprises in particular a bottleneck inner compression stress layer. The thickness of the bottleneck section interacts as well with the tempered section since due to the cooling speed of the glass container during tempering, respective stress in the temper section affected by the thickness and the structure of the bottleneck section can appear. Hence, good results with respect to the robustness of the tempered section have been found by providing also a bottleneck sandwich structure as described above.

According to a further exemplary embodiment, wherein the material of the glass container comprises more than at least 10%, in particular more than 12 %, sodium carbonate. By adding sodium carbonate, the melting point of the raw glass material is reduced so it can be transformed into glass at lower temperatures. It has found out that by providing the above-described sodium carbonate concentration, an proper tempering process can be provided, since lower start temperatures and hence a respectively adapted cooling rate during tempering has a positive effect on the robustness of the tempered glass containers.

Summarizing, by the approach of the present invention a glass container is provided having a higher robustness and a higher durability. Furthermore, improved abrasion and scratch resistance *(scuffing)* is provided. As an additional effect, due to the more robust glass container, less material may be used so that an up to 30% lighter glass container can be provided (especially for returnable bottles). The tempered glass container with the respective thicknesses and in particular with the sandwich structure according to the present invention, an improved internal pressure resistance, improved impact resistance, improved thermal shock resistance is provided. Furthermore, it has shown than high resistance and an improved drop test performance in drop tests of glass containers from a height of 4 to 5 meters are achieved by the presented glass containers. Furthermore, by the described glass container, shards of broken glass containers according to the present invention are not too small and thus visible and easy to clean from the ground for the consumer.

Also for the bottlers of the described glass containers benefits are provided. Specifically filling line performance due to less breakages can be enhanced, and an easier packaging is possible, since e.g. no cardboard box dividers are necessary. Furthermore, the weight reduction of returnable and non-returnable packaging glass at higher strength is possible. Additionally, specifically due to the soda concentration and the possible material reduction, a carbon footprint reduction is possible.

It has to be noted that embodiments of the invention have been described with reference to different subject matters. In particular, some embodiments have been described with reference to apparatus type claims whereas other embodiments have been described with reference to method type claims.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematical view of a glass container according to an exemplary embodiment of the present invention.
Fig. 2 shows a schematic overview a sandwich structure of a glass container according to an exemplary embodiment of the present invention.
Fig. 3 illustrates a diagram of respective pretensioned compressing layers and a tension layer according to an exemplary embodiment of the present invention.

### Detailed Description of Exemplary Embodiments

The illustrations in the drawings are schematic. It is noted that in different figures similar or identical elements are provided with the same reference signs.

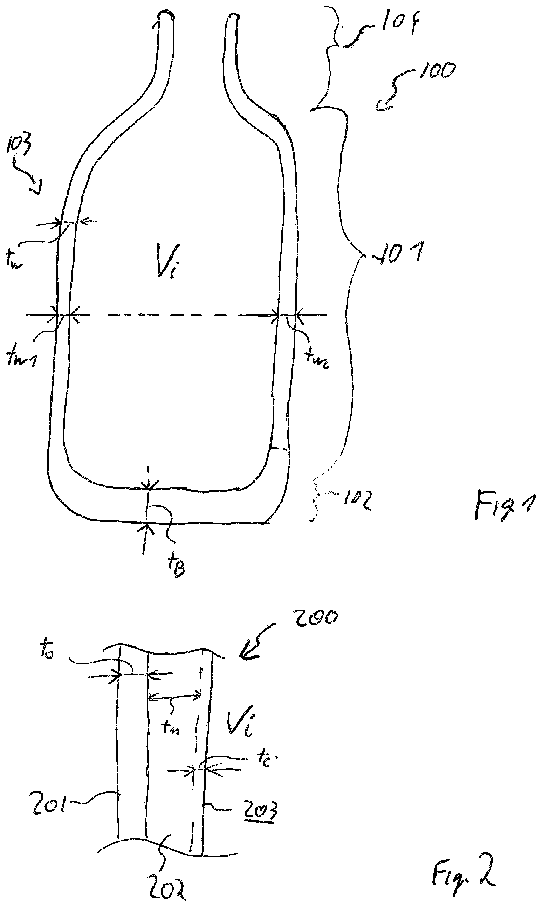

**Fig. 1** shows a schematical view of a glass container 100 according to an exemplary embodiment of the present invention. The glass container 100 comprises wall section 101 and a bottom section 102, wherein the wall section 101 and the bottom section 102 surround an inner volume Vi, wherein the tempered section 103 may also form a sandwich structure 200 comprising an outer compression stress layer 201 and an inner tensile stress layer 202 as shown in detail in Fig. 2. Furthermore, the wall section 101 comprises a tempered section 103 having a wall thickness tw between 1,1 mm and 2,3 mm.

The glass container 100 describes in the shown embodiment a glass bottle for liquid or solid material, such as beverages or other disclose or solid food articles. Additionally, the glass container 100 comprises a bottleneck section 104 having an opening for filling the container 100.

At least the wall section 101 comprises the tempered section 103. Specifically, the complete wall 101 section forms the tempered section 103. By the exemplary embodiment, the tempered section 104 has a wall thickness between 1,1 mm and 2,3 mm. Hence, the internal stress of the glass container 100 during cooling is reduced so that a tempered section 104 can be provided having less inner defects and at the same time providing proper impact resistance.

A first wall thickness tw1 and an opposite second wall thickness tw2 of the tempered section 103 at a predefined distance to the bottom section comprises a relation of 1:2. Specifically, in the present example, the wall section 101 forms a hollow cylinder which is close by the bottom section 102. The bottom section 102 may form a cylindrical, rectangle or polygonal base/ground area of the cylindrical wall section 101. The wall thickness tw1 of a first wall section at a certain distance to the bottom section 102 differs to the wall thickness tw2 of a second wall section being located at the same distance to the bottom section 102.

The bottom section 102 comprises as well a bottom tempered section, wherein a thickness relation between the wall thickness tw1, tw2 of the wall tempered section 103 and the bottom thickness tB of the bottom tempered section is between 2 and 4,5.

The bottom section 102 comprises a bottom thickness tb between 2 mm and 5 mm. Specifically, the thickness tb of the bottom section 102 interacts as well with the tempered section 103 since due to the cooling speed of the glass container 100 during tempering, respective stress in the temper section 103 affected by the thickness of the bottom section 102 can appear.

The material of the glass container 100 comprises more than at least 10%, in particular more than 12 %, sodium carbonate.

**Fig.** 2shows a schematic overview a sandwich structure of a glass container 1000 according to an exemplary embodiment of the present invention. The tempered section 103 forms a sandwich structure 200 comprising an outer compression stress layer 201 and an inner tensile stress layer 202. Specifically, by controlling the cooling of the inner and outer surface of the tempered section 103, specific layers 201, 202, 203 having different pre-stressed characteristics can be generated.

The sandwich structure comprises an inner compression stress layer 203, wherein the inner tensile stress layer 202 is arranged between the outer compression stress layer 201 and the inner compression stress layer 203. Specifically, by controlling the cooling of the inner and outer surface of the tempered section 103, the shown structure can be generated, specifically a sandwich structure 200 having the central inner compression stress layer 202 covered by the outer and inner tensile stress layer 201, 203. By additionally providing the in the compression stress layers 201, 203, the central tensile stress layer 202 is fully covered and protected by the surrounding compression stress layers 201, 203. The inner compression stress layer 203 faces the inner volume Vi and is in particular in contact with the inner volume Vi of the glass container. Hence, the interaction between the outer compression stress layer 201, the inner tensile stress layer 202 and the inner compression stress layer 203 forms a robust sandwich structure 200.

The outer compression stress layer 201 has a wall thickness to of 300 µm to 400 µm. The inner tensile stress layer 202 has a wall thickness tm of 700 µm to 1600 µm. The inner compression stress layer 203 has a wall thickness ti of 20 µm to 100 µm. Specifically, the thickness of the specific layers 201, 202, 203 can be adjusted by respective cooling power applied to the inner side or the other side of the glass container 100 during tempering. It has found out, that by providing the inner tensile stress layer 202 thicker, in particular by the above-mentioned values, with respect to the thinner outer compression stress layers 201, 203, a robust sandwich 200 and tempered section 103, respectively, can be achieved.

The bottom section 2 may also form a bottom sandwich structure comprising a bottom outer compression stress layer and a bottom inner tensile stress layer similar as shown in Fig. 2. The bottom outer compression stress layer has a wall thickness of 300µm to 400 µm, a bottom inner tensile stress layer has a wall thickness of 700 µm to 4700 µm and a bottom inner compression stress layer has a bottom wall thickness of 20 µm to 100 µm.

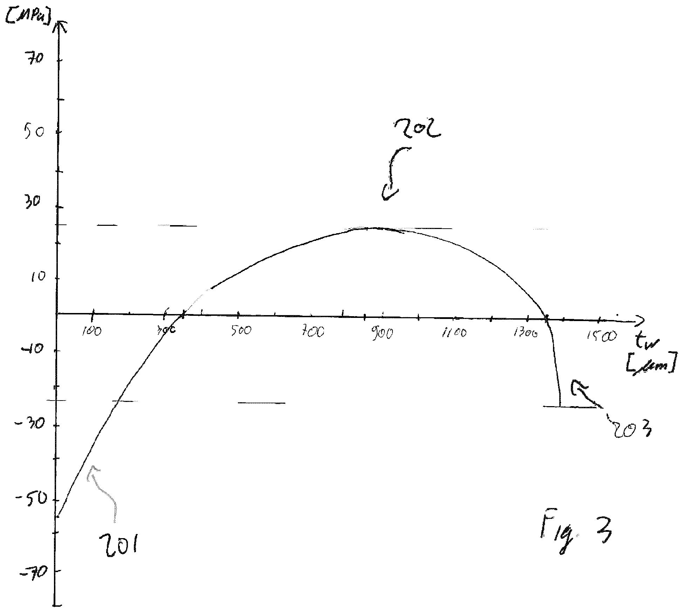

**Fig. 3** illustrates a diagram of respective pretensioned compressing layers 201, 203 and a tension layer 202 according to an exemplary embodiment of the present invention. Along the x-axis, the way from the outer surface through the tempered section 103 along the thickness direction of the wall thickness tw to the inner surface facing the inner volume Vi is shown. The wall thickness is defined at a location where the smallest thickness of the wall section is existent. The y-axis describes the measured pretensioned stress level of the layers 201, 202, 203, wherein the tensile stress has a positive sign and the compression stress has a negative sign.

In the shown exemplary embodiment the outer compression stress layer 201 comprises a maximum pretensioned compression stress -55 MPa. The inner tensile stress layer 202 comprises a maximum pretensioned tensile stress of 25 MPa. The inner compression stress layer 203 comprises a maximum pretensioned compression stress of -25 MPa. The maximum compression stress of the outer compression stress layer 201 and inner compression stress layer 203 as formed at the outer surfaces of the tempered section 103. The maximum tensile stress of the inner compression stress layer 202 is formed in the center (regarding the thickness of the tempered section 103) of the inner tensile stress layer 202. The values for the tensile stress and the compression stress define the maximum stress values within a respective layer. Specifically, the compression stress of a compression stress layers 201, 203 reduces in the direction to the inner tensile stress layer 202 and vice versa. At a transition section between a compression stress layers 201, 203 and a tensile stress layer 202, the value for the pretensioned stress is 0.

It has found out during tests, in particular internal pressure tests and impact tests, that by providing the tensile stress in the inner tensile stress layer and the compression stress in the compression stress layer within the above-mentioned ranges, a most robust sandwich and tempered section, respectively, can be achieved.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

100 glass container
101 wall section
102 bottom section
103 tempered section
104 bottleneck section
200 sandwich structure
201 outer compression stress layer
202 inner tensile stress layer
203 inner compression stress layer
Vi inner Volume
tw wall thickness
tb bottom thickness
to outer compression layer thickness
tm inner tensile layer thickness
ti inner compression layer thickness

## Claims

1. Glass container (100), comprising
a wall section (101) and a bottom section (102),
wherein the wall section (101) and the bottom section (102) surround an inner volume (Vi),
wherein the tempered section (103) forms a sandwich structure (200) comprising an outer compression stress layer (201) and an inner tensile stress layer (202),
wherein the bottom section (102) comprises a bottom tempered section,
wherein a thickness relation between the wall thickness (tw) of the wall tempered section (103) and the bottom thickness of the bottom tempered section is between 2 and 4,5.

2. Glass container (100) according to claim 1,
wherein the wall section (101) comprises a tempered section (103) having a wall thickness (tw) between 1,1 mm and 2,3 mm.

3. Glass container (100) according to claim 2,
wherein the tempered section (103) comprises a wall thickness (tw) between 1,3 mm and 2 mm.

4. Glass container (100) according to one of the claims 1 to 3,
wherein a first wall thickness (t1) and a opposite second wall thickness (t2) of the tempered section (103) at a predefined distance to the bottom section (102) comprises a relation of 1:2, in particular 1:1,5.

5. Glass container (100) according to one of the claims 1 to 4,
wherein the outer compression stress layer (201) has a wall thickness (to) of 300µm to 400 µm, in particular 340 µm to 360 µm, and/or
wherein the inner tensile stress layer (202) has a wall thickness (tm) of 700 µm to 1600 µm, in particular 900 µm to 1200 µm.

6. Glass container (100) according to one of the claims 1 to 5,
wherein the outer compression stress layer (201) comprises a pretensioned compression stress of -80 MPa to -5 MPa, in particular -70 to -20 MPa, more in particular -60 MPa to -50 MPa, and/or
wherein the inner tensile stress layer (202) comprises a pretensioned tensile stress of 10 MPa to 70 MPa, in particular 15 to 50 MPa more in particular 20 MPa to 30 MPa.

7. Glass container (100) according to one of the claims one of the claims 1 to 6,
wherein the sandwich structure (200) further comprises an inner compression stress layer (203),
wherein the inner tensile stress layer (202) is arranged between the outer compression stress layer (201) and the inner compression stress layer (203).

8. Glass container (100) according to claim 7,
wherein the inner compression stress layer (203) has a wall thickness (ti) of 20 µm to 100 µm, in particular 40 µm to 60 µm,
wherein the inner compression stress layer (203) comprises a pretensioned compression stress of -60 MPa to -5 MPa, in particular -50 to -15 MPa, more in particular -30 MPa to -20 MPa.

9. Glass container (100) according to one of the claims 1 to 8,
wherein the bottom section (102) comprises a bottom thickness between 2 mm and 5 mm, in particular 2,5 mm to 4 mm.

10. Glass container (100) according to one of the claims 1 to 9,
wherein a thickness relation between the wall thickness (tw) of the wall tempered section (103) and the bottom thickness of the bottom tempered section is between 2,5 and 3,5.

11. Glass container (100) according to claims 10,
wherein the bottom tempered section forms a bottom sandwich structure comprising a bottom outer compression stress layer (201) and a bottom inner tensile stress layer (202),
wherein the bottom outer compression stress layer (201) has a wall thickness (to) of 300µm to 400 µm, in particular 340 µm to 360 µm, and/or
wherein the bottom inner tensile stress layer (202) has a wall thickness (tm) of 700 µm to 4700 µm, in particular 900 µm to 4000 µm, and/or
wherein the bottom outer compression stress layer (201) comprises a pretensioned compression stress of -80 MPa to -5 MPa, in particular -70 to -20 MPa, more in particular -60 MPa to -50 MPa and/or
wherein the bottom inner tensile stress layer (202) comprises a pretensioned tensile stress of 10 MPa to 70 MPa, in particular 15 MPa to 50 MPa more in particular 20 MPa to 30 MPa.

12. Glass container (100) according to claim 11,
wherein the bottom sandwich structure further comprises a bottom inner compression stress layer (203),
wherein the bottom inner tensile stress layer (202) is arranged between the bottom outer compression stress layer (201) and the bottom inner compression stress layer (203),
wherein the bottom inner compression stress layer (203) has a bottom wall thickness (ti) of 20 µm to 100 µm, in particular 40 µm to 60 µm,
wherein the bottom inner compression stress layer (203) comprises a pretensioned compression stress of -60 MPa to -5 MPa, in particular -50 to -15 MPa, more in particular -30 MPa to -20 MPa.

13. Glass container (100) according to one of the claims 1 to 12, further comprising
a bottleneck section (104) comprising an opening between the environment and the inner volume (Vi),
wherein the walls section is formed between the bottom section (102) and the bottleneck section (104),
wherein the bottleneck section (104) comprises a bottom tempered section forming a bottleneck sandwich structure comprising a bottleneck outer compression stress layer (201) and a bottleneck inner tensile stress layer (202),
wherein the bottleneck sandwich structure further comprises in particular a bottleneck inner compression stress layer (203).

14. Glass container (100) according to one of the claims 1 to 13,
wherein the material of the glass container (100) comprises more than at least 10%, in particular more than 12 %, sodium carbonate.

15. Method for manufacturing a glass container (100) according to one of the claims 1 to 14, the method comprising
providing a glass container (100) with a wall section (101) and a bottom section (102),
wherein the wall section (101) and the bottom section (102) surround an inner volume (Vi),
forming a tempered section (103) at least in the wall section (101) by thermal treatment so that the tempered section (103) forms a sandwich structure (200) comprising an outer compression stress layer (201) and an inner tensile stress layer (202),
wherein the bottom section (102) comprises a bottom tempered section,
wherein a thickness relation between the wall thickness (tw) of the wall tempered section (103) and the bottom thickness of the bottom tempered section is between 2 and 4,5.

## Patentansprüche

1. Glasbehälter (100), aufweisend
einen Wandabschnitt (101) und einen Bodenabschnitt (102),
wobei der Wandabschnitt (101) und der Bodenabschnitt (102) ein Innenvolumen (Vi) umgeben,
wobei der gehärtete Abschnitt (103) eine Sandwichstruktur (200) bildet, die eine äußere Druckspannungsschicht (201) und eine innere Zugspannungsschicht (202) aufweist,
wobei der Bodenabschnitt (102) einen gehärteten Bodenabschnitt aufweist,
wobei ein Dickenverhältnis zwischen der Wanddicke (tw) des gehärteten Wandabschnitts (103) und der Bodendicke des gehärteten Bodenabschnitts zwischen 2 und 4,5 liegt.

2. Glasbehälter (100) nach Anspruch 1,
wobei der Wandabschnitt (101) einen gehärteten Abschnitt (103) mit einer Wanddicke (tw) zwischen 1,1 mm und 2,3 mm aufweist.

3. Glasbehälter (100) nach Anspruch 2,
wobei der gehärtete Abschnitt (103) eine Wanddicke (tw) zwischen 1,3 mm und 2 mm aufweist.

4. Glasbehälter (100) nach einem der Ansprüche 1 bis 3,
wobei eine erste Wanddicke (t1) und eine gegenüberliegende zweite Wanddicke (t2) des gehärteten Abschnitts (103) in einem vordefinierten Abstand zum Bodenabschnitt (102) ein Verhältnis von 1:2, insbesondere 1:1,5 aufweist.

5. Glasbehälter (100) nach einem der Ansprüche 1 bis 4,
wobei die äußere Druckspannungsschicht (201) eine Wanddicke (to) von 300 µm bis 400 µm, insbesondere 340 µm bis 360 µm, aufweist, und/oder
wobei die innere Zugspannungsschicht (202) eine Wanddicke (tm) von 700 µm bis 1600 µm, insbesondere 900 µm bis 1200 µm, aufweist.

6. Glasbehälter (100) nach einem der Ansprüche 1 bis 5,
wobei die äußere Druckspannungsschicht (201) eine vorgespannte Druckspannung von -80 MPa bis -5 MPa, insbesondere -70 bis -20 MPa, weiter insbesondere -60 MPa bis -50 MPa, aufweist, und/oder
wobei die innere Zugspannungsschicht (202) eine vorgespannte Zugspannung von 10 MPa bis 70 MPa, insbesondere 15 bis 50 MPa, weiter insbesondere 20 MPa bis 30 MPa, aufweist.

7. Glasbehälter (100) nach einem der Ansprüche 1 bis 6,
wobei die Sandwichstruktur (200) ferner eine innere Druckspannungsschicht (203) aufweist,
wobei die innere Zugspannungsschicht (202) zwischen der äußeren Druckspannungsschicht (201) und der inneren Druckspannungsschicht (203) angeordnet ist.

8. Glasbehälter (100) nach Anspruch 7,
wobei die innere Druckspannungsschicht (203) eine Wanddicke (ti) von 20 µm bis 100 µm, insbesondere 40 µm bis 60 µm, aufweist,
wobei die innere Druckspannungsschicht (203) eine vorgespannte Druckspannung von -60 MPa bis -5 MPa, insbesondere -50 bis -15 MPa, weiter insbesondere -30 MPa bis -20 MPa, aufweist.

9. Glasbehälter (100) nach einem der Ansprüche 1 bis 8,
wobei der Bodenabschnitt (102) eine Bodendicke zwischen 2 mm und 5 mm, insbesondere 2,5 mm bis 4 mm, aufweist.

10. Glasbehälter (100) nach einem der Ansprüche 1 bis 9,
wobei ein Dickenverhältnis zwischen der Wanddicke (tw) des gehärteten Wandabschnitts (103) und der Bodendicke des gehärteten Bodenabschnitts zwischen 2,5 und 3,5 liegt.

11. Glasbehälter (100) nach Anspruch 10,
wobei der gehärtete Bodenabschnitt eine Bodensandwichstruktur bildet, die eine äußere Bodendruckspannungsschicht (201) und eine innere Bodenzugspannungsschicht (202) aufweist,
wobei die äußere Bodendruckspannungsschicht (201) eine Wanddicke (to) von 300 µm bis 400 µm, insbesondere 340 µm bis 360 µm, aufweist, und/oder
wobei die innere Bodenzugspannungsschicht (202) eine Wanddicke (tm) von 700 µm bis 4700 µm, insbesondere 900 µm bis 4000 µm, aufweist, und/oder
wobei die äußere Bodendruckspannungsschicht (201) eine vorgespannte Druckspannung von -80 MPa bis -5 MPa, insbesondere -70 bis -20 MPa, weiter insbesondere -60 MPa bis -50 MPa, aufweist, und/oder
wobei die innere Bodenzugspannungsschicht (202) eine vorgespannte Zugspannung von 10 MPa bis 70 MPa, insbesondere 15 MPa bis 50 MPa, weiter insbesondere 20 MPa bis 30 MPa, aufweist.

12. Glasbehälter (100) nach Anspruch 11,
wobei die Bodensandwichstruktur ferner eine innere Bodendruckspannungsschicht (203) aufweist,
wobei die innere Bodenzugspannungsschicht (202) zwischen der äußeren Bodendruckspannungsschicht (201) und der inneren Bodendruckspannungsschicht (203) angeordnet ist,
wobei die innere Bodendruckspannungsschicht (203) eine Bodenwanddicke (ti) von 20 µm bis 100 µm, insbesondere 40 µm bis 60 µm, aufweist,
wobei die innere Bodendruckspannungsschicht (203) eine vorgespannte Druckspannung von -60 MPa bis -5 MPa, insbesondere -50 bis -15 MPa, weiter insbesondere -30 MPa bis -20 MPa, aufweist.

13. Glasbehälter (100) nach einem der Ansprüche 1 bis 12, ferner aufweisend
einen Flaschenhalsabschnitt (104), der eine Öffnung zwischen der Umgebung und dem Innenvolumen (Vi) aufweist,
wobei der Wandabschnitt zwischen dem Bodenabschnitt (102) und dem Flaschenhalsabschnitt (104) ausgebildet ist,
wobei der Flaschenhalsabschnitt (104) einen gehärteten Bodenabschnitt aufweist, der eine Flaschenhalssandwichstruktur bildet, die eine äußere Flaschenhalsdruckspannungsschicht (201) und eine innere Flaschenhalszugspannungsschicht (202) aufweist,
wobei die Flaschenhalssandwichstruktur ferner insbesondere eine innere Flaschenhalsdruckspannungsschicht (203) aufweist.

14. Glasbehälter (100) nach einem der Ansprüche 1 bis 13,
wobei das Material des Glasbehälters (100) mehr als mindestens 10 %, insbesondere mehr als 12 %, Natriumcarbonat aufweist.

15. Verfahren zum Herstellen eines Glasbehälters (100) nach einem der Ansprüche 1 bis 14, das Verfahren aufweisend
Bereitstellen eines Glasbehälters (100) mit einem Wandabschnitt (101) und einem Bodenabschnitt (102),
wobei der Wandabschnitt (101) und der Bodenabschnitt (102) ein Innenvolumen (Vi) umgeben,
Bilden eines gehärteten Abschnitts (103) mindestens in dem Wandabschnitt (101) durch Wärmebehandlung, so dass der gehärtete Abschnitt (103) eine Sandwichstruktur (200) bildet, die eine äußere Druckspannungsschicht (201) und eine innere Zugspannungsschicht (202) aufweist,
wobei der Bodenabschnitt (102) einen gehärteten Bodenabschnitt aufweist,
wobei ein Dickenverhältnis zwischen der Wanddicke (tw) des gehärteten Wandabschnitts (103) und der Bodendicke des gehärteten Bodenabschnitts zwischen 2 und 4,5 liegt.

## Revendications

1. Récipient en verre (100), comprenant
une section de paroi (101) et une section de fond (102),
dans lequel la section de paroi (101) et la section de fond (102) entourent un volume interne (Vi),
dans lequel la section trempée (103) forme une structure sandwich (200) comprenant une couche de contrainte de compression externe (201) et une couche de contrainte de traction interne (202),
dans lequel la section de fond (102) comprend une section trempée de fond, dans lequel un rapport d'épaisseur entre l'épaisseur de paroi (tw) de la section trempée de paroi (103) et l'épaisseur de fond de la section trempée de fond est compris entre 2 et 4,5.

2. Récipient en verre (100) selon la revendication 1,
dans lequel la section de paroi (101) comprend une section trempée (103) présentant une épaisseur de paroi (tw) comprise entre 1,1 mm et 2,3 mm.

3. Récipient en verre (100) selon la revendication 2,
dans lequel la section trempée (103) comprend une épaisseur de paroi (tw) comprise entre 1,3 mm et 2 mm.

4. Système selon l'une des revendications 1 à 3,
dans lequel une première épaisseur de paroi (t1) et une seconde épaisseur de paroi opposée (t2) de la section trempée (103) à une distance prédéfinie de la section de fond (102) présentent un rapport de 1:2, en particulier de 1:1,5.

5. Récipient en verre (100) selon l'une des revendications 1 à 4,
dans lequel la couche de contrainte de compression externe (201) présente une épaisseur de paroi (to) de 300 µm à 400 µm, en particulier de 340 µm à 360 µm, et/ou
dans lequel la couche de contrainte de traction interne (202) présente une épaisseur de paroi (tm) de 700 µm à 1600 µm, en particulier de 900 µm à 1200 µm.

6. Récipient en verre (100) selon l'une des revendications 1 à 5,
dans lequel la couche de contrainte de compression externe (201) comprend une contrainte de compression pré-tendue de -80 MPa à -5 MPa, en particulier de -70 à - 20 MPa, plus particulièrement de -60 MPa à -50 MPa, et/ou
dans lequel la couche de contrainte de traction interne (202) comprend une contrainte de traction pré-tendue de 10 MPa à 70 MPa, en particulier de 15 à 50 MPa, plus particulièrement de 20 MPa à 30 MPa.

7. Récipient en verre (100) selon l'une des revendications 1 à 6,
dans lequel la structure sandwich (200) comprend en outre une couche de contrainte de compression interne (203),
dans lequel la couche de contrainte de traction interne (202) est agencée entre la couche de contrainte de compression externe (201) et la couche de contrainte de compression interne (203).

8. Récipient en verre (100) selon la revendication 7,
dans lequel la couche de contrainte de compression interne (203) présente une épaisseur de paroi (ti) de 20 µm à 100 µm, en particulier de 40 µm à 60 µm,
dans lequel la couche de contrainte de compression interne (203) comprend une contrainte de compression pré-tendue de -60 MPa à -5 MPa, en particulier de -50 à - 15 MPa, plus particulièrement de -30 MPa à -20 MPa.

9. Récipient en verre (100) selon l'une des revendications 1 à 8,
dans lequel la section de fond (102) comprend une épaisseur de fond comprise entre 2 mm et 5 mm, en particulier de 2,5 mm à 4 mm.

10. Récipient en verre (100) selon l'une des revendications 1 à 9,
dans lequel un rapport d'épaisseur entre l'épaisseur de paroi (tw) de la section trempée de paroi (103) et l'épaisseur de fond de la section trempée de fond est compris entre 2,5 et 3,5.

11. Récipient en verre (100) selon la revendication 10,
dans lequel la section trempée de fond forme une structure sandwich de fond comprenant une couche de contrainte de compression externe de fond (201) et une couche de contrainte de traction interne de fond (202),
dans lequel la couche de contrainte de compression externe de fond (201) présente une épaisseur de paroi (to) de 300 µm à 400 µm, en particulier de 340 µm à 360 µm, et/ou
dans lequel la couche de contrainte de traction interne de fond (202) présente une épaisseur de paroi (tm) de 700 µm à 4700 µm, en particulier de 900 µm à 4000 µm, et/ou
dans lequel la couche de contrainte de compression externe de fond (201) comprend une contrainte de compression pré-tendue de -80 MPa à -5 MPa, en particulier de -70 à -20 MPa, plus particulièrement de -60 MPa à - 50 MPa et/ou
dans lequel la couche de contrainte de traction interne de fond (202) comprend une contrainte de traction pré-tendue de 10 MPa à 70 MPa, en particulier de 15 MPa à 50 Mpa, plus particulièrement de 20 MPa à 30 MPa.

12. Récipient en verre (100) selon la revendication 11,
dans lequel la structure sandwich de fond comprend en outre une couche de contrainte de compression interne de fond (203),
dans lequel la couche de contrainte de traction interne de fond (202) est agencée entre la couche de contrainte de compression externe de fond (201) et la couche de contrainte de compression interne de fond (203),
dans lequel la couche de contrainte de compression interne de fond (203) présente une épaisseur de paroi de fond (ti) de 20 µm à 100 µm, en particulier de 40 µm à 60 µm,
dans lequel la couche de contrainte de compression interne de fond (203) comprend une contrainte de compression pré-tendue de -60 MPa à -5 MPa, en particulier de -50 à -15 MPa, plus particulièrement de -30 MPa à - 20 MPa.

13. Récipient en verre (100) selon l'une des revendications 1 à 12, comprenant en outre
une section de goulot (104) comprenant une ouverture entre l'environnement et le volume interne (Vi),
dans lequel la section de paroi est formée entre la section de fond (102) et la section de goulot (104),
dans lequel la section de goulot (104) comprend une section trempée de fond formant une structure sandwich de goulot comprenant une couche de contrainte de compression externe de goulot (201) et une couche de contrainte de traction interne de goulot (202),
dans lequel la structure sandwich de goulot comprend en outre en particulier une couche de contrainte de compression interne de goulot (203).

14. Récipient en verre (100) selon l'une des revendications 1 à 13,
dans lequel le matériau du récipient en verre (100) comprend plus d'au moins 10 %, en particulier plus de 12 %, de carbonate de sodium.

15. Procédé de fabrication d'un récipient en verre (100) selon l'une des revendications 1 à 14, le procédé comprenant :
la fourniture à un récipient en verre (100) d'une section de paroi (101) et d'une section de fond (102),
dans lequel la section de paroi (101) et la section de fond (102) entourent un volume interne (Vi),
la formation d'une section trempée (103) au moins dans la section de paroi (101) par traitement thermique de sorte que la section trempée (103) forme une structure sandwich (200) comprenant une couche de contrainte de compression externe (201) et une couche de contrainte de traction interne (202),
dans lequel la section de fond (102) comprend une section trempée de fond, dans lequel un rapport d'épaisseur entre l'épaisseur de paroi (tw) de la section trempée de paroi (103) et l'épaisseur de fond de la section trempée de fond est compris entre 2 et 4,5.
